# DEMANDE DE BREVET EUROPEEN

(11) **EP 2 993 080 A1**
(43) Date de publication de la demande: **09.03.2016**
(21) Numéro de dépôt: 15183749.9
(22) Date de dépôt: 02.09.2013
(51) Int. Cl.: B60P 3/39, A47C 17/80

(54) **LIT POUR VÉHICULE**

(62) Demande divisionnaire de: 13182623.2
(71) Demandeur: Perakis, Philippe, 1997 Haute-Nendaz (CH)
(72) Inventeur: Perakis, Philippe, 1997 Haute-Nendaz (CH)
(74) Mandataire: Leman Consulting S.A.

(57) **Abrégé**

La présente invention concerne un lit pour véhicule, comprenant deux supports longitudinaux (11), une pluralité de barres transversales (12, 12') jointes auxdits supports longitudinaux (11), lesdits supports longitudinaux comportant à chaque extrémité un élément de liaison permettant de relier le lit (10) au véhicule. Ce lit est caractérisé en ce que lesdits supports longitudinaux sont composés chacun d'au moins deux parties pouvant être assemblées solidaires entre elles, en ce que ses supports longitudinaux sont ajustables en longueur, et en ce que lesdites barres transversales (12, 12') sont également ajustables en longueur, permettant de définir un écartement entre les deux supports longitudinaux (11) selon la forme du véhicule.

## Description

### DOMAINE TECHNIQUE

La présente invention concerne un lit modulaire qui peut se placer d'une manière amovible dans un véhicule, en particulier un lit qui n'utilise pas la surface de chargement naturelle du véhicule. Le lit de l'invention peut être adapté à différents véhicules, ayant des formes et des surfaces disponibles différentes.

De façon plus détaillée, l'invention concerne un lit pour véhicule, comprenant deux supports longitudinaux, une pluralité de barres transversales jointes auxdits supports longitudinaux, lesdits supports longitudinaux comportant à chaque extrémité un élément de liaison permettant de relier le lit au véhicule.

### ETAT DE LA TECHNIQUE

Des solutions ont été proposées par le passé pour permettre à une ou deux personnes de dormir dans un véhicule de type "break". La plus simple étant l'utilisation d'un matelas gonflable ou un simple tapis de mousse. Un des problèmes majeurs rencontrés est que très peu de véhicules de ce type ont une longueur de chargement plate compatible avec un lit (au minimum 180cm). Un autre problème majeur est que toute la surface de couchage doit être libre et donc aucun autre objet ne doit demeurer dans la surface chargement durant l'occupation de cette surface par le lit. De plus, une fois les sièges arrières repliés, la surface n'est pas toujours parfaitement plane. C'est pourquoi, dans la pratique les utilisateurs de véhicules restent sur les sièges avant inclinés à leur maximum pour une nuit très souvent inconfortable.

Le document ES1081805 décrit une solution visant le même problème en proposant d'utiliser la surface du porte-bagage, monté sur le toit, pour en faire une surface de couchage. Ceci signifie tout d'abord que le porte-bagage doit être libre de tout bagage et donc ne servir qu'à cet effet. De plus, une fois enlevé du toit, cette surface est posée sur la surface de chargement du véhicule, ce qui signifie que ce dernier ne pourra pas être utilisé pour d'autres objets.

La publication allemande DE 35 10 014 concerne un cadre extensible ou rétractable pourvu d'un sommier, ce cadre pouvant être utilisé dans une position rétractée et servir de banc, ou dans une position étendue et servir de lit. Ce cadre est utilisé dans un camping car, un bateau ou une caravane en particulier.

Ce cadre est formé de deux éléments longitudinaux, reliés entre eux d'une part par des tringles à ressort et d'autre part par des longerons. Les tringles à ressort et les longerons se trouvent dans deux plans différents. Les longerons et les tringles à ressort sont chacun composés de deux parties, coulissant l'une part rapport à l'autre et permettant d'être allongés ou rétractés. L'une des parties d'une tringle à ressort et d'un longeron est solidaire de l'un des éléments longitudinaux et l'autre partie de la tringle à ressort et du longeron correspondant est solidaire de l'autre élément longitudinal. Le déplacement de l'un des éléments longitudinaux par rapport à l'autre permet d'écarter ou de resserrer le cadre.

Dans cette invention, les éléments longitudinaux sont formés d'une seule pièce, rigide. De plus, les tringles à ressort de même que les longerons sont solidaires de ces éléments longitudinaux. Il en résulte que seule la largeur du lit peut être modifiée et que l'objet de cette invention ne peut donc pas être adapté à différents véhicules ayant des longueurs utilisables différentes. Il ne peut pas non plus être adapté à des véhicules ayant des formes non rectangulaires. De plus, il ne peut pas être mis dans une position pliée ou démontée de telle façon à pouvoir être rangé dans le coffre d'une voiture.

### Brève description de l'invention

Le but de la présente invention est de proposer un lit pour véhicule qui puisse être placé dans une configuration de rangement dans laquelle il rentre dans le coffre d'un véhicule tel qu'une voiture, et dans une configuration montée ou d'utilisation, dans laquelle ce lit s'adapte non seulement à la largeur disponible dans le véhicule, mais également à la longueur disponible. De plus, un but de l'invention est de proposer un lit qui permette d'être rapidement mis en place, s'accommode de surface non plane, n'oblige pas de vider le véhicule pour être opérationnel et évite tout mouvement latéral en opération.

Ce but est atteint par un lit pour véhicule tel que défini en préambule et caractérisé en ce que lesdits supports longitudinaux sont composés chacun d'au moins deux parties pouvant être assemblées solidaires entre elles, en ce que ses supports longitudinaux sont ajustables en longueur, et en ce que lesdites barres transversales sont également ajustables en longueur, permettant de définir un écartement entre les deux supports longitudinaux selon la forme du véhicule.

Comme indiqué ci-dessus, chaque support longitudinal est composé d'au moins deux parties qui peuvent être rendues solidaires entres elles afin de former les côtés du lit. Ces supports longitudinaux peuvent être placés dans différentes positions de façon à pouvoir prendre des longueurs totales différentes. Ces supports longitudinaux sont reliés entre eux par des barres transversales réglables en longueur et jointes aux supports afin d'adapter la largeur du lit à l'habitacle du véhicule.

Il est préférable que la largeur, une fois déterminée par l'utilisateur, ne puisse pas être modifiée aisément, en particulier lors de l'utilisation du lit. Ceci peut être atteint par l'utilisation d'au moins deux barres transversales placées vers les deux extrémités du lit, comprenant un dispositif de verrouillage. Un autre moyen d'atteindre cet objectif est l'utilisation de barres transversales réglables en longueur par friction, cette friction permettant de conserver la largeur du lit telle que déterminée par l'utilisateur. Dans ce cas, les supports du lit viendront à proximité des parois du véhicule sans pour autant exercer une pression sur lesdites parois.

Selon un mode de réalisation, la largeur du lit telle que définie grâce aux barres transversales réglables avec verrouillage permet de venir en butée sur les parois du véhicule. Le verrouillage des barres transversales permet d'ajuster la largeur du lit aux dimensions de l'habitacle du véhicule.

Pour ce qui concerne la zone de contact entre le lit et le véhicule, plusieurs variantes sont possibles. La première variante est que le support vienne en appui contre la paroi. Ce support dispose d'une partie recouverte d'un matériau souple (mousse par exemple) et ce sont les barres transversales qui définissent la largeur. Dans le cas des barres transversales verrouillables, on peut mettre en pression les supports afin que le matériau souple appuie contre la paroi du véhicule. Pour des barres non verrouillables, le support viendra naturellement en butée contre la paroi et avec les mouvements latéraux du lit, un faible espace va être créé.

Une autre manière est que l'extrémité d'au moins deux barres transversales dispose d'un matériau souple et ce sont elles qui viennent en appui sur la paroi du véhicule. Dans ce cas, la barre transversale, bien que solidaire du support afin d'adapter la largeur du lit, traverse le support pour venir en contact avec la paroi du véhicule.

Afin d'obtenir une forme de lit non rectangulaire (supports non parallèles), plusieurs variantes sont possibles.

Selon une première variante, une fois assemblés entre elles, les parties du support forment un support rigide. Le réglage des longueurs des barres transversales permet d'avoir une plus petite largeur dans une extrémité du lit et une plus grande largeur à l'autre extrémité du lit. Il faudra prévoir que la jonction entre une barre transversale et un support puisse former un angle non droit, ajustable autorisant une variation autour de l'angle de 90°.

Selon une deuxième variante, l'assemblage des parties du support autorise un déplacement angulaire latéral tout en assurant la rigidité longitudinale. Par exemple, une charnière est utilisée pour relier une partie à une autre. Cette charnière permet aussi de replier les parties pour le transport du lit. De même que pour l'exemple précédent, la jonction entre une barre transversale et au moins une partie du support formera un angle non droit et sera ajustable.

Selon une troisième variante, une fois les tronçons du support assemblés pour former le support, on peut jouer sur l'élasticité pour créer la forme non parallèle (trapézoïdale) du lit. Les barres transversales avec verrouillage permettent de mettre en pression les supports pour les écarter l'un par rapport à l'autre et venir appuyer sur les parois du véhicule. De même que pour l'exemple précédent, la jonction entre une barre transversale et au moins une partie du support formera un angle non droit et sera ajustable.

Le nombre minimal de tronçons formant le support est de deux et peut avantageusement être de trois, voire plus, pour permettre un meilleur suivi des formes et de la longueur disponible du véhicule. Le but d'être modulaire est double, d'une part faciliter le transport et d'autre part permettre au support de suivre au mieux le flan du véhicule et d'utiliser au mieux la longueur disponible. Ceci permet de bénéficier de toute la surface disponible, étant entendu que dans de nombreux véhicules, la largeur n'est pas constante tout au long de la surface de l'habitacle.

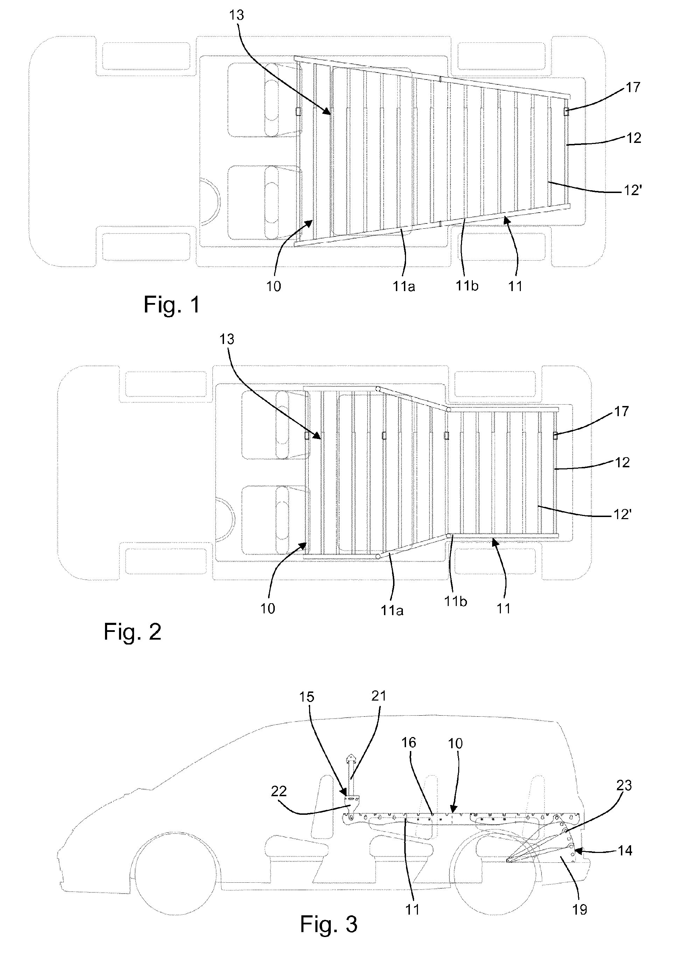

Les différents tronçons formant un support peuvent être placés dans des positions relatives différentes, de telle façon que la longueur totale d'un support puisse être variée et adaptée à la longueur du véhicule dans lequel ce support doit être placés. Selon une première variante illustrée par la figure 3, les tronçons du support comportent des trous répartis selon des intervalles réguliers le long des supports. Plusieurs trous différents peuvent être utilisés pour fixer les tronçons les uns par rapport aux autres et ainsi choisir la longueur des supports. Le nombre de barres transversales est adapté à la longueur des supports et à la place disponible dans le véhicule.

Selon une autre variante, il est possible d'utiliser un système rétractable (par exemple télescopique), à savoir que les parties du support s'emboitent ou se glissent les unes dans les autres. Pour les autres modes de réalisations, les barres transversales sont de préférence amovibles et stockées séparément des supports. Ce mode de réalisation rétractable peut être utilisé avec des barres transversales amovibles ou non. Dans le deuxième cas, chaque partie du support est liée à une (ou deux) barre à la manière d'une échelle télescopique. La grande différence par rapport à l'échelle est que les barres sont ajustables en longueur ce qui permet d'ajuster la taille du lit au véhicule.

Les éléments de liaison, placées aux extrémités de chaque support permettent d'une part de surélever le lit par rapport à la surface de chargement et d'autre part de transmettre le poids du lit au véhicule. Selon un mode préféré de l'invention, les éléments de liaison à l'extrémité proches de la porte arrière du véhicule transmettent le poids sur la surface de chargement et à l'autre extrémité, les éléments de liaison sont fixés aux ceintures de sécurité. En effet, dans le cas où il a fallu incliner les sièges arrières, la surface de chargement peut ne pas être plane et l'élément de liaison solidaire de la ceinture de sécurité permet de s'affranchir de devoir trouver une surface solide et stable pour la pose du lit.

Le support peut comprendre des logements pour recevoir les barres transversales afin d'empêcher celles-ci de se déplacer le long du support. D'autres solutions sans l'utilisation de logements permettent d'arriver au même but, par exemple en emboitant l'extrémité de la barre sur le support. La surface de pose du matelas est formée par les barres transversales, ceci signifie que les supports arrivent au maximum à fleur ou sous la surface formée par les barres transversales.

Selon un mode de réalisation, le matériau souple permettant l'appui du lit sur la paroi du véhicule peut être un élément indépendant et ne pas faire partie du support ou d'une barre transversale comme expliqué plus haut. Il s'agit d'un élément tampon qui s'accroche sur l'extérieur du support que l'on place à l'endroit où le lit doit appuyer sur la paroi du véhicule. Cet élément tampon comprend une surface élastique d'un côté, qui sera la surface appuyant sur la paroi du véhicule et d'un dispositif de montage sur le support telles que des crochets.

Selon un mode de réalisation de l'élément tampon, les crochets sont libres de coulisser le long du support et sont de préférence recouvert d'un matériau apte au glissement (tel que le Teflon). Ceci permet que lors de mouvement vertical du lit par le poids de son utilisateur, la partie élastique appuyant sur la paroi ne bouge pas, mais c'est le support qui glisse dans le crochet de l'élément tampon. Grâce à cette configuration, les mouvements verticaux du lit ne provoquent pas de marques contre la paroi du véhicule.

### BRÈVE DESCRIPTION DES FIGURES

La présente invention et ses avantages seront mieux compris en référence aux figures annexées et à la description détaillée d'un mode de réalisation particulier, dans lesquelles :
- La figure 1 est une vue de dessus d'un véhicule équipé d'un lit selon un premier mode de réalisation de l'invention;
- La figure 2 est une vue similaire à celle de la figure 1, d'un deuxième mode de réal isation;
- La figure 3 est une vue latérale d'un véhicule équipé d'un lit selon l'invention;
- La figure 4 représente un élément du lit selon l'invention, dans deux positions différentes;
- La figure 5 représente une variante de l'élément de la figure 4, dans deux positions différentes;
- La figure 6A illustre une variante du lit de l'invention, dans une position déployée; et
- La figure 6B représente le lit de la figure 6A, dans une position repliée.

### MANIERES DE REALISER L'INVENTION

En référence aux figures, le lit 10 pour véhicules selon l'invention comporte essentiellement deux supports longitudinaux 11, une pluralité de barres transversales 12, 12' maintenues sur les supports longitudinaux 11 et formant un sommier 13, un premier type d'éléments de liaison 14, permettant de maintenir l'arrière du lit en position et un second type d'éléments de liaison 15, permettant de maintenir l'avant du lit en position.

Dans le mode de réalisation illustré en particulier par la figure 1, les supports longitudinaux 11 sont réalisés en deux parties 11 a, 11 b, dans une matière et/ou selon une forme qui assure une bonne rigidité.

Comme cela est visible sur la figure 3, les supports longitudinaux 11 comportent des logements 16 dans lesquels les barres transversales 12, 12' sont destinées à être placées lorsque le lit est monté.

Ces supports longitudinaux comportent également une zone de fixation dans laquelle plusieurs trous sont réalisés. Ces trous sont répartis selon des intervalles réguliers. Le choix des trous utilisés pour assembler les différents tronçons des supports longitudinaux permet de choisir la longueur totale des supports longitudinaux et ainsi, d'adapter la longueur du lit à la longueur disponible. Le nombre de barres transversales 12, 12' utilisées est adapté à la longueur des supports et à la place disponible dans le véhicule.

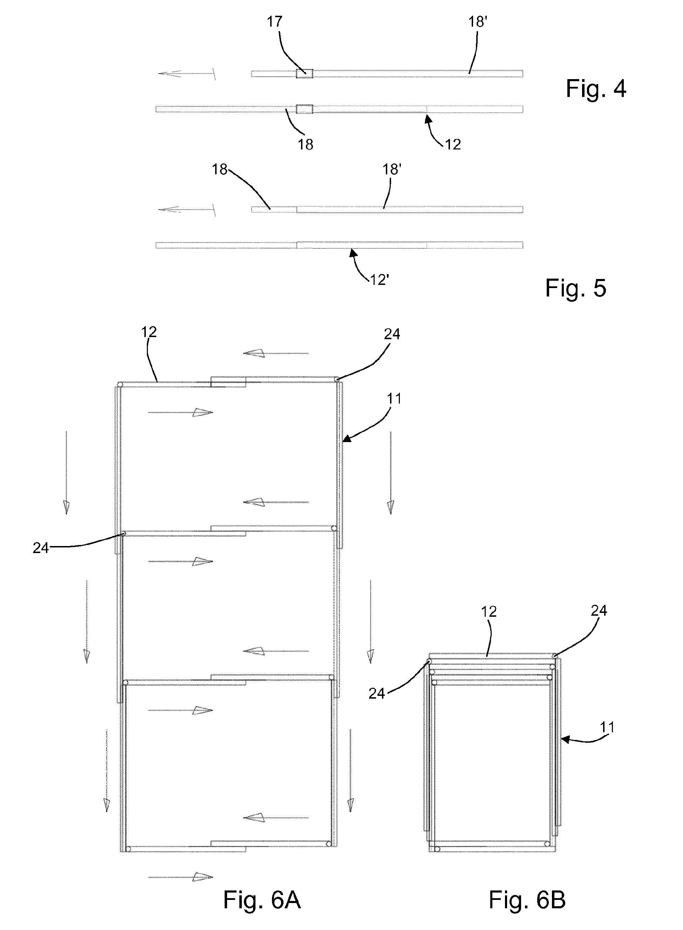

Les barres transversales 12, 12' sont de deux types différents. Un type de barres transversales, illustré plus en détail par la figure 4 et portant la référence 12 comporte un élément de verrouillage 17. De façon plus détaillée, une barre transversale est composée de deux tiges 18, 18', l'une des tiges 18 coulissant dans l'autre tige 18' de façon à modifier la longueur totale de la barre. L'élément de verrouillage 17 permet de bloquer le déplacement des deux tiges coulissantes. Le deuxième type de barres transversales 12' est formé de deux tiges 18, 18' coulissant l'une par rapport à l'autre, mais ne comportant pas d'élément de verrouillage. Ce deuxième type de barres transversales est illustré par la figure 5.

Selon un mode de réalisation avantageux, les barres transversales 12, 12' comportent à chacune de leur extrémité, un élément de maintien (non représenté) qui peut par exemple être réalisé en une matière élastique. Les dimensions relatives de l'élément de maintien et du logement 16 des supports longitudinaux 11 sont telles que l'extrémité de la barre transversale 12, 12' peut être introduite dans le logement 16 du support, en appliquant une contrainte, et que la barre transversale est maintenue dans ce support 11.

Le lit 10 de l'invention peut être maintenu en place latéralement dans le véhicule de plusieurs façons. Selon une première façon, des barres transversales 12, 12' sont placées entre les supports longitudinaux 11 de telle façon que ces supports soient proches des parois du véhicule ou en appui contre ces parois. Un élément de protection (non représenté) peut être placé entre les supports et les parois, de façon à ce que les supports prennent appui de façon non agressive sur le véhicule.

Selon une deuxième façon, le lit 10 est maintenu latéralement en place par déformation des supports longitudinaux 11, de telle façon que ces supports longitudinaux s'appuient contre des éléments intérieurs du véhicule. Ainsi, le lit ne se déplacera pas latéralement dans le véhicule.

Le lit 10 est maintenu dans une position plane et sensiblement horizontale au moyen du premier type d'élément de liaison 14 et du second type d'élément de liaison 15.

Comme cela est visible sur la figure 3, le premier type d'élément de liaison 14 est destiné à maintenir l'arrière du lit en position. Il est composé d'une pièce plane 19 ayant sensiblement la forme d'une portion de disque au maximum égale à un quart de disque. A proximité de la périphérie de cette pièce 19 sont disposés des trous 23 agencés pour recevoir une barre transversale, une tige de soutien ou une goupille. Selon un mode de réalisation avantageux, la goupille, la tige de soutien ou une barre transversale est placée dans l'un des trous du premier type d'élément de liaison 14, dans une position adaptée à la configuration du véhicule. Cette barre de maintien ou tige de soutien ou une goupille similaire est également introduite dans une pièce correspondante disposée de l'autre côté du lit, de telle façon que la barre transversale ou la tige de soutien soit sensiblement horizontale ou en d'autres termes, que les extrémités arrière des supports longitudinaux 11 soient sensiblement à la même hauteur. Les supports longitudinaux 11 sont rendus solidaires de la tige de soutien. Le choix du trou dans lequel la tige de soutien est introduite se fait en fonction de la configuration du véhicule et en particulier, ce choix se fait de telle façon qu'aucun obstacle ne se trouve en contact avec le sommier 13 lorsque le lit est monté.

Le premier type d'élément de liaison 14 peut également prendre plusieurs formes. A titre d'exemple, ce premier type d'élément de liaison 14 peut être formé de deux tiges articulées entre elles par l'une de leurs extrémités, l'autre extrémité étant reliées par une tige coulissante comportant des moyens de blocage. En allongeant ou en raccourcissant la tige coulissante, il est possible d'élever ou de baisser l'arrière du lit.

Selon une autre variante, la partie arrière des supports longitudinaux maintenue par une barre rigide. Cette barre rigide peut être placée à une hauteur adéquate et maintenue à cette hauteur par un organe de réglage qui pourrait être un cric par exemple de type cric à vis présent dans la majorité des véhicules.

Le second type d'élément de liaison 15 coopère avec la ceinture de sécurité 21. Selon un mode de réalisation visible sur la figure 3, ce second type d'élément de liaison 15 est destiné à maintenir l'avant du lit en position. Il comporte un flasque 22 pourvu d'un élément support destiné à recevoir le support latéral 11, et une ouverture.

La ceinture de sécurité est placée dans l'ouverture, de façon à former une boucle. Un loquet faisant partie du second type d'élément de liaison 15 se place dans la boucle et verrouille le flasque 22 sur la ceinture de sécurité 21.

Selon un mode de réalisation particulier, les supports longitudinaux 11 sont rigides. Dans ce mode de réalisation, ces supports sont généralement parallèles entre eux. Au moins l'une des barres transversales 12, 12', en principe l'une des barres situées à l'avant du lit, est pourvue des éléments de verrouillage 17.

Selon un mode de réalisation illustré par la figure 2, les supports longitudinaux 11 sont articulés. Dans le mode de réalisation représenté par cette figure, chaque support est formé de trois parties, les parties étant reliées deux à deux par une charnière 24. Pour la mise en place des supports longitudinaux 11, il est possible de prévoir deux barres latérales avec un élément de verrouillage pour les tronçons d'extrémité des supports. Ainsi, le tronçon ou la partie du support la plus en arrière est contrainte contre les parois du véhicule au moyen de deux barres transversales 12 comportant un élément de verrouillage 17. Le tronçon le plus en avant du support latéral 11 est également contraint contre les parois intérieures du véhicule par deux barres transversales 12 comportant des éléments de verrouillage 17. Le tronçon intermédiaire ou les tronçons intermédiaires dans le cas où les supports comportent plus de trois tronçons, peuvent être laissé libres, c'est-à-dire qu'ils ne sont pas contraints vers les parois du véhicule. Il est au contraire également possible de choisir de contraindre ces tronçons intermédiaires ou au moins certains d'entre eux. L'utilisation de plusieurs tronçons reliés entre eux par une charnière permet, en choisissant quels tronçons sont utilisés pour servir de support aux barres transversales 12, 12', de modifier la longueur totale des supports longitudinaux et par conséquent la longueur du lit. Ceci permet de s'adapter à la longueur disponible dans le véhicule.

L'articulation entre les parties des supports longitudinaux 11 est telle qu'elle permette une rotation autour d'un axe vertical de l'un des tronçons par rapport à un autre, alors qu'elle empêche une rotation autour d'un axe horizontal.

Cette variante est avantageuse par le fait qu'elle permet de réduire l'encombrement des supports lorsque le lit 10 n'est pas monté.

Les figures 6A et 6B illustrent un mode de réalisation de l'invention dans lequel les supports longitudinaux 11 sont formés de tronçons qui peuvent coulisser longitudinalement les uns par rapport aux autres.

Dans la figure 6A, le lit est déplié dans une position d'utilisation. La figure 6B représente le lit dans une position pliée ou de transport.

Selon une variante avantageuse, les tronçons des supports longitudinaux 11 comportent un rail dans lequel un autre tronçon peut venir coulisser. Ceci permet une extension ou une rétractation du lit dans une direction longitudinale. Une telle extension ou rétractation permet de s'adapter à la longueur disponible dans le véhicule. Les barres transversales 12, 12' peuvent également se rétracter ou s'étendre en longueur, soit de la même manière que dans les modes de réalisation précédents, soit au moyen de rails, similaires aux rails des supports longitudinaux.

Dans le mode de réalisation illustré par ces figures 6A et 6B, certaines barres transversales 12, quatre dans l'exemple représenté, sont liées aux supports longitudinaux par des charnières 24. En principe, ces barres transversales 12 restent solidaires des supports longitudinaux 11 lorsque le lit est plié, comme cela est représenté par la figure 6B. Les autres barres transversales nécessaires pour former un sommier peuvent être posées sur les supports longitudinaux 11 comme dans les modes de réalisation précédents. Il est également possible de prévoir que les barres transversales puissent coulisser longitudinalement sur des rails formés sur ces supports longitudinaux. Selon une variante, le sommier comporte d'une part les barres transversales liées aux supports longitudinaux par les charnières 24 et d'autre part, des plateaux qui sont solidaires de ces barres transversales et qui permettent de poser un matelas.

La présente invention permet une utilisation optimale de l'habitacle d'un véhicule pour y installer un lit. En particulier, ce lit peut prendre une position de rangement et une position étendue ou d'utilisation. Dans la position de rangement, il peut être rangé dans le coffre du véhicule et notamment dans le coffre d'une voiture de dimension conventionnelle, tout en laissant de la place disponible par exemple sur les sièges arrières. Dans la position étendue, ce lit peut être adapté non seulement à la place disponible en largeur, mais également à la place disponible en longueur. Ainsi, le lit de l'invention peut être adapté et utilisé dans une large gamme de véhicules.

Le lit de l'invention est particulièrement simple à installer, à replier ou à démonter. De plus, il s'adapte très facilement à pratiquement tout véhicule, même des véhicules de faible longueur ou ayant un habitacle dont les parois ne sont pas parallèles ou présentant des obstacles tels que des passages de roues en particulier. Il offre en outre l'avantage de pouvoir être surélevé par rapport au plancher du véhicule, ce qui laisse la possibilité d'utiliser la zone située sous le lit pour y stocker du matériel.

Le système de fixation du lit au véhicule permet également un réglage du niveau du lit. Il est en particulier possible de disposer le lit de façon à être horizontal ou incliné selon une inclinaison choisie, même lorsque le véhicule est placé sur un terrain en pente ou un terrain n'ayant pas une pente correspondant à l'inclinaison souhaitée pour le lit.

Dans une variante dans laquelle les barres transversales peuvent être désolidarisées des supports longitudinaux, tous les éléments formant le lit de l'invention peuvent être formés d'éléments allongés et étroits qui peuvent être disposés parallèlement les uns aux autres, dans une position de transport ou de stockage. Ceci permet un gain de place lorsque le lit n'est pas utilisé.

## Revendications

1. Lit pour véhicule, comprenant deux supports longitudinaux (11), une pluralité de barres transversales (12, 12') jointes auxdits supports longitudinaux (11), lesdits supports longitudinaux comportant à chaque extrémité un élément de liaison permettant de relier le lit (10) au véhicule, **caractérisé en ce que** lesdits supports longitudinaux sont composés chacun d'au moins deux parties pouvant être assemblées solidaires entre elles, **en ce que** ses supports longitudinaux sont ajustables en longueur, et **en ce que** lesdites barres transversales (12, 12') sont également ajustables en longueur, permettant de définir un écartement entre les deux supports longitudinaux (11) selon la forme du véhicule.

2. Lit pour véhicule selon la revendication 1, **caractérisé en ce qu'**au moins deux desdites barres transversales (12) comprennent un élément de verrouillage (17) en longueur.

3. Lit pour véhicule selon la revendication 1 ou 2, **caractérisé en ce que** la jonction entre une barre transversale (12, 12') et un support longitudinal (11) forme un angle sensiblement droit, ladite jonction étant ajustable autorisant une variation autour de l'angle de 90°.

4. Lit pour véhicule selon l'une des revendications 1 à 3, **caractérisé en ce que** l'assemblage des au moins deux parties du support longitudinal (11) autorise un déplacement angulaire latéral tout en assurant la rigidité longitudinale.

5. Lit pour véhicule selon l'une des revendications 1 à 3, **caractérisé en ce qu'**au moins une des parties du support longitudinal (11) comprend un degré de souplesse autorisant une forme non-parallèle des deux supports longitudinaux (11).

6. Lit pour véhicule selon l'une des revendications 1 à 5, **caractérisé en ce que** le support longitudinal (11) comprend sur sa partie supérieure des logements (16) pour recevoir les barres transversales (12, 12') empêchant celles-ci de se déplacer le long du support longitudinal.

7. Lit démontable selon l'une des revendications 1 à 6, **caractérisé en ce que** les barres transversales (12) comprenant un élément de verrouillage (17) se terminent par un matériau souple permettant un appui non agressif sur le véhicule.

8. Lit pour véhicule selon l'une des revendications 1 à 7, **caractérisé en ce qu'**au moins une section des cotés extérieurs du support longitudinal comprend un matériau souple permettant un appui non agressif sur le véhicule.

9. Lit pour véhicule selon l'une des revendications 1 à 8, **caractérisé en ce qu'**il comprend un premier type d'élément de liaison (14) à une extrémité du support longitudinal (11) et formant un pied ajustable en hauteur par rapport au plancher du véhicule et un second type d'élément de liaison (15) venant se fixer sur une ceinture de sécurité (21) du véhicule.

10. Lit pour véhicule selon la revendication 9, **caractérisé en ce que** le second type d'élément de liaison (15) comprend un flasque (22) et un loquet, la flasque (22) comprenant une ouverture destinée à laisser passer une boucle de la ceinture de sécurité (21), le loquet venant se placer dans cette boucle pour verrouiller la ceinture de sécurité.

11. Lit pour véhicule selon la revendication 1, **caractérisé en ce que** lesdites parties des supports longitudinaux sont agencées pour pouvoir coulisser longitudinalement les unes par rapport aux autres.

12. Lit pour véhicule selon la revendication 11, **caractérisé en ce qu'**au moins une partie dudit support longitudinal comporte un rail dans lequel une autre partie dudit support longitudinal peut venir coulisser.
